# EUROPEAN PATENT SPECIFICATION

(11) **EP 3 954 351 B1**
(45) Date of publication and mention of the grant of the patent: **16.07.2025**
(21) Application number: 20883831.8
(22) Date of filing: 23.10.2020
(51) Int. Cl.: A61H 3/00, A61H 1/02, B25J 13/08, B25J 9/00

(54) **ANKLE-ASSISTED EXOSKELETON DEVICE**
KNÖCHELGESTÜTZTE EXOSKELETTVORRICHTUNG
DISPOSITIF EXOSQUELETTE AIDÉ PAR LES CHEVILLES

(30) Priority: 08.11.2019 CN 201911085735
(43) Date of publication of application: 16.02.2022
(73) Proprietor: Yrobot, Grand Cayman, KY1-1209 (KY); Yrobot (Suzhou) Co., Ltd., Suzhou, Jiangsu 215123 (CN)
(72) Inventor: DING, Ye, Suzhou, Jiangsu 215123 (CN); LI, Xinhui, Cambridge, Massachusetts 02138 (US); PROTEUS, Benjamin, Cambridge, Massachusetts 02138 (US)
(74) Representative: Patentanwälte Bressel und Partner mbB
(86) International application number: PCT/CN2020/123356
(87) International publication number: WO 2021/088664

(56) References cited:
- WO-A1-2019/057797
- CN-A- 106 956 243
- CN-A- 107 126 348
- CN-A- 107 137 207
- CN-A- 109 730 904
- CN-A- 109 730 904
- JP-A- 2019 122 591
- US-A1- 2017 348 176
- US-A1- 2017 348 176
- US-A1- 2018 125 738
- US-A1- 2019 282 424

## Description

### Technical Field

The present invention relates to the technical field of wearable devices, and in particular, to an ankle assisting exoskeleton device that provides auxiliary force for user's ankle and can be used daily.

### Background

At present, wearable devices for lower limbs are designed for different purposes, including wearable devices that enhance human strength, wearable devices that provide rehabilitation training, and wearable devices that improve movement efficiency and reduce human energy consumption. For the purpose of enhancing human strength and rehabilitation, wearable lower limb devices or exoskeletons usually rely on a full-leg rigid metal structure to provide external body support. These lower limb exoskeleton systems can enable healthy people or physically disabled people to perform tasks that cannot be accomplished with their own strength. However, the existing rigid wearable devices have the following disadvantages in coordinating human actions and improving movement efficiency: (1) The interference between the device and the biological joints can introduce the misalignment of the device joints and the biological joints during movements; (2) The natural motion of the biological joints are restricted because the degrees of freedom (DOF) of the device are less than the DOF of the lower limb joints of the human body; (3) The user consumes extra energy when using the device due to the large weight and inertia of the device structure are not fully compensated by the device itself. Slow actuation response and lack of accurate human intension detection also make it difficult to use such full-leg rigid exoskeleton devices freely in daily life.

At present, some soft exosuit devices are made of lightweight and flexible materials to reduce constraints on biological joints and provide joint assistance. Such devices provide a lighter solution for assisting joints. However, these soft exosuit devices rely on the user's skin surface to provide tangential force as a reaction force for assisting joints. In other words, these devices provide auxiliary forces to the user's limb joints on one side, and apply tangential forces tangential to the skin surface to the user's skin surface on the other side. These tangential forces rub and squeeze user's skin, and make the device discomfortable to use. Moreover, when the user's muscle stiffness is insufficient or the shape of limb is not cone like, which can make it difficult to provide a large enough tangential force as a reaction force of the auxiliary force. Then, these devices cannot be properly used.

Therefore, there is a rising need for a wearable robotic device that can be easily worn without restricting user's joints, and does not rely on user's skin surface to provide tangential force while providing lower limb assistance, so as to improve user's daily mobility and action efficiency.

US 2017 / 0 348 176 A1 describes a mechanical transmission, tethered actuation system, an autonomous ankle exoskeleton design and a method of their use employing a cable, pulleys and associated pulley housings to change angular transmission of linear force on the cable. The pulleys are linked by a ground link and the cable is threaded across and between the pulleys, whereby rotation of either of the pulleys in one direction causes rotation of the other pulley in the opposite direction. Independently of the pulleys, the pulley housings can freely rotate about associated pulleys, and a link between the pulley housings is provided, whereby rotation of one of the pulley housings in one direction causes rotation of the other pulley housing at an equivalent angle in the opposite direction, thereby enabling a change in transmission angle of linear force on the cable threaded across and between the pulleys and the associated pulley housing essentially without resistance. When pulleys have the same angular velocity ratio as that of the associated pulley housings, there is no cable slack since the net changes in length of the cable wrapping around two pulleys is zero.

CN 109 730 904 A describes a wearable external skeleton for assisting in resting and walking. The external skeleton mainly comprises a waist binding base, a control box, hip joint driving devices, hip joint stay wires, knee joint flexible shafts, ankle joint flexible shafts, a sitting posture supporting belt, thigh assisting devices, shank assisting devices, a sitting posture supporting device and foot wearing devices. The walking assisting and sitting-posture resting functions are realized under the driving of only two motors. The stay wire transmission and flexible shaft transmission are designed according to the motion relations of all joints; power is output through gear meshing, coil spring winding and the like, the light-weight mechanical structure is driven to drive hip, knee and ankle joints to move in the walking period, and the walking assistance is provided for a user; for the leg on-ground key posture in the human body motion process, through the electromagnetic clamping function of the knee joints, the freedom degree of the knee joints is locked at proper time, and the weight of an upper body acts on the ground through force guide passages of the external skeleton to reduce the loads on lower limb; in combination with the human body sitting posture state statics principle and the ZMP principle, by switching the mechanical structure, the sitting posture resting function is realized.

US 2018 / 0 125 738 A1 describes an exoskeleton device that includes a cable, a lever that is connected to the cable, a frame comprising a strut that redirects the cable toward the lever, wherein the frame is coupled to the lever by a rotational joint; and a motor that is connected to the cable and configured to cause the cable to provide a torque about the rotational joint, wherein the cable is configured to provide the torque by exerting a first force on the lever and a second force on the frame, and wherein the cable is further configured to provide the torque in a first rotational direction and is prevented from applying the torque in an opposite rotational direction to the first rotational direction.

US 2019 / 0 282 424 A1 describes a powered exoskeleton which is designed to provide assistance to a user, where the powered exoskeleton may have power-generating elements in one location and power-applying elements in another location, so that a user can easily wear the powered exoskeleton.

WO 2019 / 057797 A1 describes a lower limb of an ambulatory exoskeleton comprising at least a pelvis segment, a leg segment and a foot segment, the leg segment being hinged at the first end of same to the pelvis segment and at the second end of same to the foot segment, the leg segment comprising a spring element and means for varying the distance separating the ends of the leg segment, the means for varying the distance separating the ends of the leg segment being carried by the pelvis segment.

### Summary of the Invention

In order to solve at least one of the above-mentioned defects in the prior art, the present invention proposes an ankle assisting exoskeleton device, which includes:
an actuator configured to be worn on a part near center of gravity of a user (for example, behind a waist);
a lower limb support; and
a cable configured to controllably apply a pulling force to the lower limb support when driven by the actuator, wherein,
the lower limb support includes:
   a calf ring configured to encircle the user's calf;
   a link assembly attached to the calf ring and extending downwards; and
   a foot support hinged to a lower end of the link assembly and connected to the cable, and the foot support is configured to drive the user's foot to rotate around ankle joint through an upward pulling force exerted on the user's sole.

According to the invention, a front end of the foot support is configured to clamp the user's foot in a vertical direction, and a rear end of the foot support is configured to be located behind the user's heel, and the rear end is connected with the cable; the lower limb support further includes: a torsion spring provided between the lower end of the link assembly and the foot support, which is configured to apply a torque to the foot support causing the front end thereof to be lifted upwards; and a sole pulling ring hinged to the foot support between the front end and the rear end of the foot support, which is configured to pull the user's sole.

According to a possible embodiment of the present invention, the pair of support arms connects the rear end with the front end on left and right sides, and the front end consists of support arm front ends of the pair of support arms and an instep strap attached thereto, the instep strap is configured to partially cover the user's instep.

According to a possible embodiment of the present invention, the link assembly includes a pair of connecting rods arranged on left and right sides of the foot support, and an upper end of each of the pair of connecting rods is respectively attached to left and right sides of the calf ring, an lower end of each of the pair of connecting rods is respectively hinged to the foot support.

According to a possible embodiment of the present invention, the link assembly includes a support block that connects the pair of connecting rods with each other at a partial height of the link assembly.

According to a possible embodiment of the present invention, the ankle assisting exoskeleton device further includes a sleeve sleeved outside of the cable, wherein the cable can slide in the sleeve, an upper end of the sleeve is fixed to the actuator, and a lower end of the sleeve is connected to the lower limb support.

According to a possible embodiment of the present invention, the link assembly includes a support block that connects the pair of connecting rods with each other at a partial height of the link assembly, and the lower limb support further includes a sleeve base hinged to the support block, wherein the lower end of the sleeve is fixed to the sleeve base.

According to a possible embodiment of the present invention, the ankle assisting exoskeleton device further includes one or more sensors configured to detect the user's biological signal and the pulling force applied by the cable to the foot support in real time, the ankle assisting exoskeleton device further includes a controller configured to use a detected data from the sensors to control the pulling force applied by the cable to the foot support in real time.

According to a possible embodiment of the present invention, the actuator is provided with a roller around which the cable is wound, a motor configured to drive the roller to rotate, and a transmission that transmits power between the motor and the roller, and the ankle assisting exoskeleton device also includes a power supply configured to be worn in front of the user's waist for supplying power to various power-consuming components.

According to a possible embodiment of the present invention, the ankle assisting exoskeleton device includes an actuator, two independent lower limb supports that are configured to be worn on the user's left and right legs respectively, and two cables corresponding to the two lower limb supports respectively.

The present invention may be embodied as the schematic embodiments in the drawings. However, it should be noted that the drawings are only schematic, and any changes conceived under the teachings of the present invention should be considered to be included in the scope of the present invention, and the scope of the present invention is only delimited by the appended claims.

### Description of the Drawings

The drawings show several exemplary embodiments of the invention. These drawings should not be construed as necessarily limiting the scope of the invention. The same and/or similar reference signs throughout the text may refer to the same and/or similar elements, in which:
Fig. 1 is a schematic perspective view of an ankle assisting exoskeleton device worn on a user's lower limbs according to a possible embodiment of the present invention;
Fig. 2 is a schematic partial enlarged view of the ankle assisting exoskeleton device worn on the user's lower limbs shown in Fig. 1;
Fig. 3 is a schematic exploded perspective view of the lower limb support of the ankle assisting exoskeleton device shown in Figs. 1 to 2;
Fig. 4 is a schematic diagram of the force applied to the lower limb support of the ankle assisting exoskeleton device shown in Figs. 1 to 3; and
Fig. 5 is a schematic exploded perspective view of the foot support of the lower limb support of the ankle assisting exoskeleton device shown in Figs. 1 to 3;
Fig. 6 shows the arrangement of sensors and microprocessors in the ankle assisting exoskeleton device shown in Figs. 1-3.

### Detailed Description of Preferred Embodiments

The present invention will now be described in more detail with reference to the accompanying drawings, in which exemplary embodiments of the present invention are shown. However, the present invention can be implemented in many different forms and should not be construed as necessarily limited to the exemplary embodiments disclosed herein. On the contrary, these exemplary embodiments are only provided to illustrate the present invention and convey the concept of the present invention to those skilled in the art.

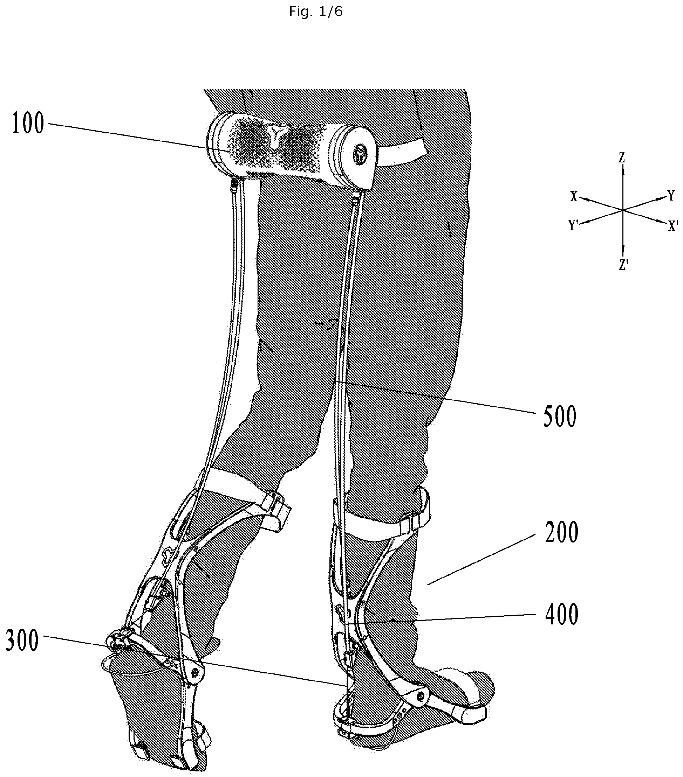

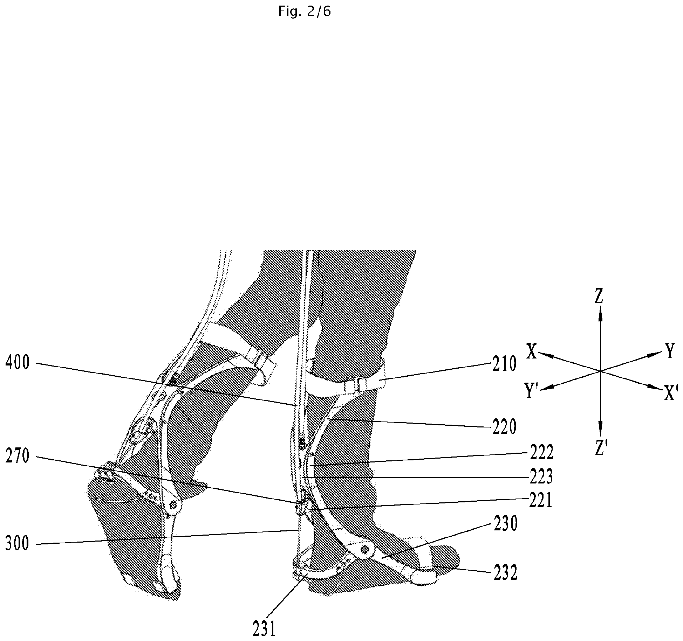

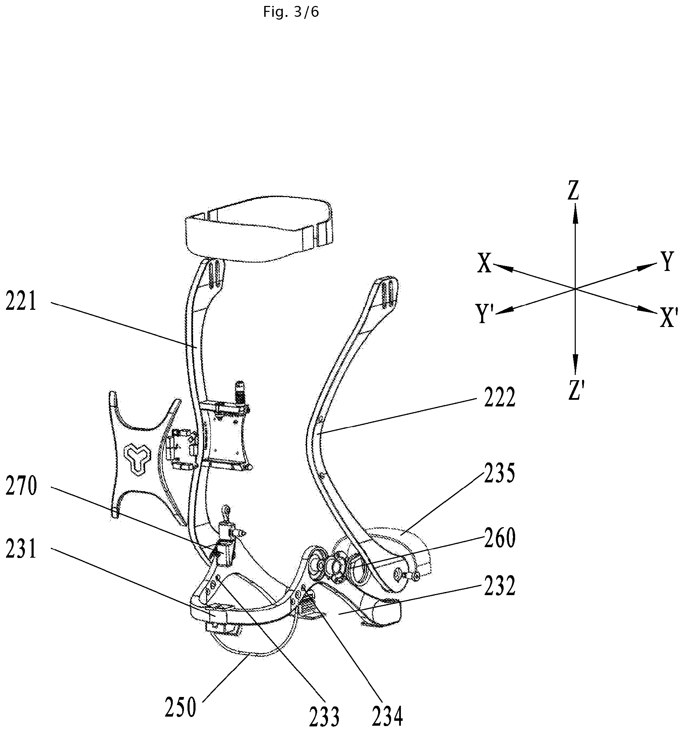

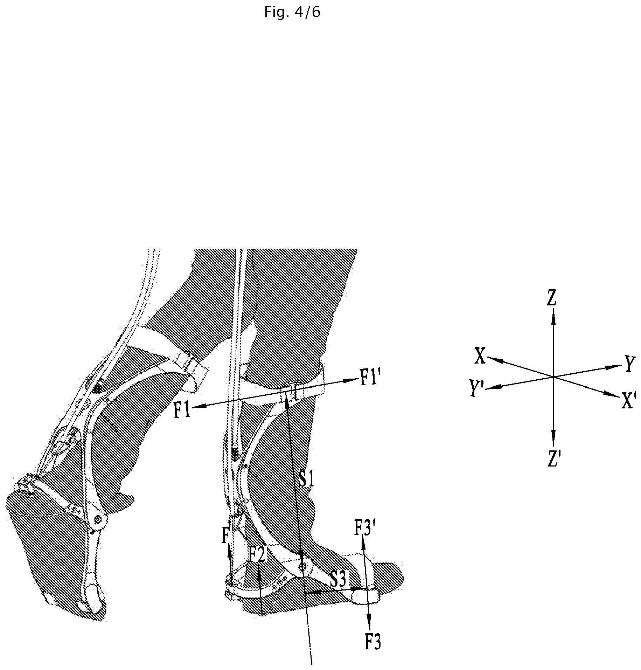

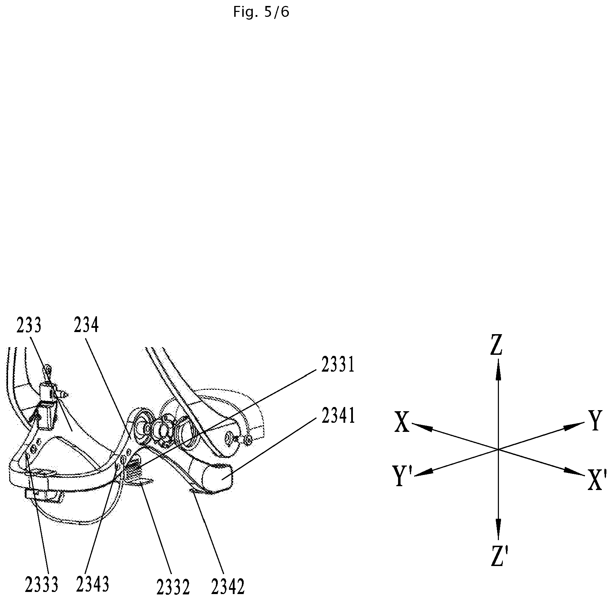

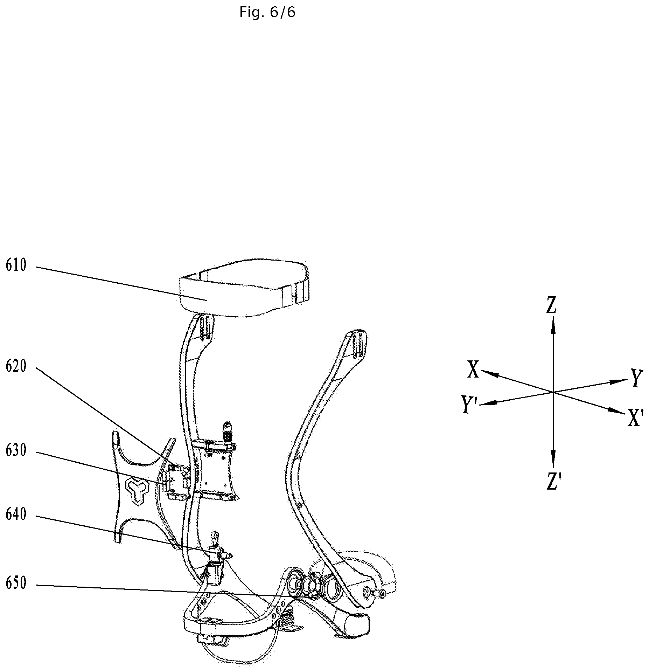

Fig. 1 is a schematic perspective view of an ankle assisting exoskeleton device worn on the lower limbs of a user according to a possible embodiment of the present invention. Fig. 2 is a schematic partial enlarged view of the ankle assisting exoskeleton device worn on the lower limbs of the user shown in Fig. 1. Fig. 3 is a schematic exploded perspective view of a lower limb support of the ankle assisting exoskeleton device shown in Figs. 1-2. Fig. 4 is a schematic diagram of the force applied to the lower limb support of the ankle assisting exoskeleton device shown in Figs. 1 to 3. Fig. 5 is a schematic exploded perspective view of a foot support of the lower limb support of the ankle assisting exoskeleton device shown in Figs. 1-3. Fig. 6 shows the arrangement of sensors and microprocessors in the ankle assisting exoskeleton device shown in Figs. 1-3. In order to make the following description of the possible embodiments of the present invention easier to understand, in each view, the arrow ZZ' indicates the vertical direction, the arrow YY' indicates the front-to-rear direction, and the arrow XX' indicates the transverse direction. The so-called front-rear direction YY' can be understood as the front-rear direction with reference to the user wearing the ankle assisting exoskeleton device, which covers the front Y pointing in the direction that the user is facing towards and the back Y' pointing in the direction that the user is facing away from. The so-called vertical direction ZZ' can be understood as the height direction with reference to the user wearing the ankle assisting exoskeleton device, which covers the upper Z and the lower Z'. The so-called transverse direction XX' can be understood as the left and right direction with reference to the user wearing the ankle assisting exoskeleton device, which covers the left direction X pointing in the left hand side of the user and the right direction X' pointing in the right hand side of the user. In addition, any direction perpendicular to the vertical direction ZZ' can be understood as a horizontal direction. It is worth noting that the above definition of orientation is only provided for the purpose of better describing the technical solution of the present invention, and should not be construed as a limitation to the present invention in any way.

With reference to Figs. 1 to 3, the ankle assisting exoskeleton device according to the present invention includes: an actuator 100 configured to be worn behind the waist of a user; a lower limb support 200; and a cable 300 configured to controllably exert a pulling force to the lower limb support 200 when driven by the actuator 100. Further, the lower limb support 200 includes: a calf ring (for example, made of knitted fabric) 210 configured to surround the user's calf; a foot support 230, a front end 232 of the foot support 230 is configured to vertically clamp the user's foot, a rear end 231 of the foot support 230 is configured to be located behind the user's heel, and the rear end 231 is connected to the cable 300; a link assembly 220 disposed between the calf ring 210 and the foot support 230, wherein an upper end of the link assembly 220 is attached to the calf ring 210 (for example, by a detachable hook and loop fastener, etc.), and a lower end of the link assembly 220 is hinged to the foot support 230 between the front end 232 and the rear end 231 of the foot support 230 (so that the foot support 230 can rotate about a transverse axis relative to the link assembly 220); a torsion spring 260 disposed between the lower end of the link assembly 220 and the foot support 230, which is configured to apply a torque to the foot support 230 to lift the front end 232 upwards; and a sole pulling ring 250 hinged to the foot support 230 between the front end 232 and the rear end 231 of the foot support 230 (so that the sole pulling ring 250 can rotate about a transverse axis relative to the foot support 230), which is configured to pull (or hook) the user's sole (for example, the heel).

According to the above technical solution of the present invention, when the user wears the ankle assisting exoskeleton device according to the present invention, it only covers a small part (less than 25% of the limb surface area) of the user's limbs (especially joints), so it will not cause any restriction on the movement of the user's joints. In particular, the present ankle assisting exoskeleton device only partially covers the ankle joint that it assists without causing any constraints and obstacles to the other joints (such as the knee joint) that it does not assist, since the calf ring 210 is configured to surround the user's calf instead of the knee joint. Further, referring to Fig. 4, when the present ankle assisting exoskeleton device is working, the actuator 100 applies a pulling force F to the rear end 231 of the foot support 230 through the cable 300, and the pulling force F applies a pulling torque to the foot support 230 to move the rear end 231 of the foot support 230 upwards and the front end 232 of the foot support 230 downwards; when the pulling torque is greater than the spring torque exerted by the torsion spring 260, the rear end 231 exerts an upward pulling force F2 (i.e., a normal force perpendicular to the skin surface of the sole) to the sole (in particular, the heel) through the sole pulling ring 250 so as to assist the ankle in plantar flexion (also known as plantar flexion) movement. It is worth mentioning that, the front end 232 will apply a force F3 to the ground under the action of the pulling force F2 instead of applying a relatively large force to the user's foot so as not to cause user's discomfort, since the user's forefoot abuts against the ground when performing a plantar flexion movement; when the pulling torque is less than the spring torque exerted by the torsion spring 260, the front end 232 of the foot support 230 will apply an upward normal force F3' to the sole, which is perpendicular to the surface of the sole so as to assist the ankle in plantarflexion (also known as dorsiflexion) movement; and whenever the link assembly 220 will only receive a torque that makes it rotate around the foot support 230, therefore, the link assembly 220 will only exert normal forces F1, F1' to the user's calf, which are perpendicular to the skin surface of the calf, through the calf ring 210, , and this also allows the calf ring 210 to only partially contact the calf without tightly holding the calf, thereby improving the user's comfort. Therefore, the ankle assisting exoskeleton device will only generate normal forces F1, F1', F2, F3' perpendicular to the skin surface that are applied to the user's skin surface in contact during operation, and will not apply a tangential force to the user's skin surface in contact, which is tangential to the user's skin surface. Therefore, the ankle assisting exoskeleton device will not cause skin friction and tangential compression to cause discomfort to the user, and can provide sufficient assistance without being affected by the user's skin laxity and muscle strength. In addition, the normal forces F1, F1' are smaller and the assisting force F3' is larger, since the moment arm S1 of the normal forces F1 and F1' is larger, and the moment arm S3 of the assisting force F3' is smaller. Therefore, the reaction force applied to the user's calf is relatively small, but the assisting force applied to the foot is relatively large, which further improves the comfort and effectiveness of the user when using the ankle assisting exoskeleton device for ankle assistance.

With reference to Figs. 1 to 3 and 5, according to a possible embodiment of the present invention, the position where the sole pulling ring 250 is hinged to the foot support 230 is located between the position where the link assembly 220 is hinged to the foot support 230 and the rear end 231.

With reference to Figs. 1 to 3 and 5, according to a possible embodiment of the present invention, the foot support 230 includes a pair of support arms 233, 234 (i.e., the left side support arm 233 and the right side support arm 234) connecting the rear end 231 to the front end 232 on the left and right sides, wherein the front end 232 is constituted by support arm front ends 2331 and 2341 of the pair of support arms 233, 234 and an instep strap 235 attached thereto (for example, through detachable hook and loop fasteners, Velcro etc.), and the instep strap 235 is configured to partially cover the user's instep.

Therefore, referring to Fig. 4, according to the above-mentioned embodiment, when the pulling torque applied by the cable 300 is less than the spring torque applied by the torsion spring 260, the support arm front ends 2331, 2341 will apply an upward normal force F3' to the sole, which is perpendicular to the surface of the sole, to assist the ankle in dorsiflexion movement.

Referring to Fig. 5, according to a possible embodiment of the present invention, the support arm front end 2331, 2341 of the pair of support arms 233, 234 include protrusions 2332, 2342 extending towards each other at their bottoms.

Therefore, referring to Fig. 4, according to the above embodiment, when the pulling torque applied by the cable 300 is less than the spring torque applied by the torsion spring 260, the protrusions 2332, 2342 will apply an upward normal force F3' to the sole, which is perpendicular to the surface of the sole to assist the ankle in dorsiflexion (also known as dorsiflexion) movement, and it will not cause the user's sole's discomfort when the force F3' is large, since the protrusions 2332, 2342 are in surface contact with the user's sole,.

Referring to Figs. 1 to 3 and 5, according to the present invention, the pair of support arms 233, 234 together with the rear end 231 are U-shaped and configured to be horizontally (at least partially) surround the user's foot.

Referring to Fig. 5, according to a possible embodiment of the present invention, the pair of support arms 233, 234 include multiple sets of hinge holes, wherein each set of hinge holes include two hinge holes 2333, 2343 disposed in the pair of support arms 233, 234 oppositely in the transverse direction, and the sole pulling ring 250 is hinged to the pair of support arms 233, 234 at one set of the multiple sets of hinge holes.

Therefore, according to the above-mentioned embodiment, the position where the sole pulling ring 250 is hinged to the foot support 230 can be chosen from a variety of options to better match the user's foot, so that the ankle assisting exoskeleton device can assist users in a more efficient and more reliable manner.

Still referring to Fig. 5, according to a possible embodiment of the present invention, the pair of support arms 233, 234 include at least three sets of hinge holes.

Referring to Figs. 1 to 3, according to a possible embodiment of the present invention, the link assembly 220 includes a pair of connecting rods 221, 222 (that is, the left connecting rod 221 and the right connecting rod 222) arranged on the left and right sides of the foot support 230, each of the pair of connecting rods 221, 222 is respectively attached to the left and right sides of the calf ring 210 at its upper end, and respectively hinged to the foot support 230 at its lower end. Specifically, the left connecting rod 221 is hinged to the left support arm 233, and the right connecting rod 222 is hinged to the right support arm 234.

Therefore, according to the above embodiment, the calf ring 210 and the foot support 230 are only connected with each other through the pair of connecting rods 221, 222, which greatly reduces the weight of the lower limb support 200 and further reduces the covered area of the user's limbs. Therefore, the physical exhaustion of the user when wearing the ankle assisting exoskeleton device is minimized, and the comfort is further improved.

Referring to Figs. 1 to 3, according to a possible embodiment of the present invention, the link assembly 220 includes a support block 223 that connects the pair of connecting rods 221, 222 with each other along a part of the height of the link assembly 220. Although it has been shown in the figure that the support block 223 connects the pair of connecting rods 221, 222 with each other at the middle of the link assembly 220 in the vertical direction, it is understandable that the position of the support block 223 in the vertical direction is variable, for example, it can be located above or below the middle of the link assembly 220 in the vertical direction. Therefore, any position of the support block 223 in the vertical direction should be regarded as included in the scope of the present invention.

Therefore, according to the above-mentioned embodiment, due to the existence of the support block 223, the structure of the link assembly 220 is more stable and therefore can support the lower limb support 200 more reliably, and since the support block 223 is only located along a part of the height of the link assembly 220, the support block 223 does not significantly increase the weight of the link assembly 220.

Referring to Figs. 2 and 3, according to a possible embodiment of the present invention, the ankle assisting exoskeleton device further includes a sleeve 400 sheathed outside the cable 300, wherein the cable 300 can slide in the sleeve 400, and the sleeve 400 is fixed to the actuator 100 at its upper end and connected to the lower limb support 200 at its lower end. In particular, the cable 300 and the sleeve 400 constitute a Bowden Cable.

Therefore, according to the above embodiment, the sleeve 400 can be used to guide the cable 300 between the actuator 100 and the lower limb support 200, so that the actuator 100 can apply a pulling force to the lower limb support 200 through the cable 300 more efficiently and reliably. As a result, the ankle assisting exoskeleton device can provide users with assistive force in a more efficient and more reliable manner.

Referring to Figs. 2 and 3, according to a possible embodiment of the present invention, the lower limb support 200 further includes a sleeve base 270 hinged to the support block 223, so that the sleeve base 270 can rotate about a transverse axis relative to the support block 223, wherein the lower end of the sleeve 400 is fixed to the sleeve base 270.

Therefore, according to the above embodiment, the lower end of the sleeve 400 can rotate with the sleeve base 270 relative to the support block 223, which makes the angular position of the lower end of the sleeve 400 varies with the movement of the user's foot. As a result, the direction in which the cable 300 exits from the lower end of the sleeve 400 is always directed towards the rear end 231 of the foot support 230 pulled by the cable 300. In other words, the lower end of the sleeve 400 always guides the cable 300 towards the rear end 231 of the foot support 230 without imposing any obstruction in a direction transverse to that in which the cable 300 extends, so that the actuator 100 can apply a pulling force to the lower limb support 200 through the cable 300 more efficiently and reliably. As a result, the ankle assisting exoskeleton device can provide users with assistive force in a more efficient and more reliable manner.

According to a possible embodiment of the present invention, the ankle assisting exoskeleton device further includes one or more sensors (for example, IMU (Inertial Measurement Unit) sensors, EMG (electromyogram) sensors, force sensors, etc.), which are configured to detect user's biological signals (for example, foot movement, foot angle, foot acceleration, leg movement, leg angle, leg acceleration, muscle activity, etc.) in real time and the pulling force applied by the cable 300 to the foot support 200. The ankle assisting exoskeleton device also includes a controller (for example, a microprocessor) configured to use the detection data from the sensors to control the pulling force applied by the cable 300 to the foot support 200 in real time.

Therefore, according to the above-mentioned embodiments, the present ankle assisting exoskeleton device uses sensors to detect the user's biological signals (for example, foot movement, foot angle, foot acceleration, leg movement, leg angle, leg acceleration, muscle activity and the like) in real time. Then, the controller can use the detected data to determine the movement mode that is and will be performed by the user (for example, the user is about to stand, walk, run, etc.) and the action that is and will be performed by the user's foot (for example, curvature movement, plantarflexion movement), and then the controller further uses the detected pulling force applied by the cable 300 to the foot support 200 to perform a closed-ring control of the pulling force so as to assist the user's ankle in real time, accurately and prospectively. Therefore, no matter what movement mode (for example, the user is about to stand, walk, run, etc.) that is and will be performed by the user and no matter what action (for example, curvature movement, plantarflexion movement) that is and will be performed by the user's foot, this ankle assisting exoskeleton device can assist the user's ankle in real time, accurately and prospectively.

Referring to Fig. 6, according to a possible embodiment of the present invention, the ankle assisting exoskeleton device includes an EMG sensor 610 arranged at the rear of the calf ring 210, an IMU sensor 620 and a microprocessor 630 arranged in a support block 223, a force sensor 640 arranged on the sleeve base 270 and an IMU sensor 650 arranged on the foot support 230. In addition, the ankle assisting exoskeleton device further includes a circuit signal wire 500 configured to transmit data and power between the actuator 100 and the various sensors and the microprocessor.

Therefore, according to the above-mentioned embodiment, after the power is obtained from the actuator 100 through the circuit signal wire 500, the EMG sensor 610 measures the biological signal of the user's calf, the IMU sensor 620 measures the inertial signal of the user's calf, the IMU sensor 650 measures the inertial signal of the user's foot, and the force sensor 640 measures the pulling force applied by the cable 300. Then the microprocessor 630 can use the data output by the above-mentioned sensors to predict the user's actions and further control the pulling force applied by the cable 300 in a closed loop, so that the ankle assisting exoskeleton device can assist the user's ankle in real-time, precisely and prospectively. However, it is worth noting that the positions of the above-mentioned sensors and microprocessor are only exemplary, and their specific positions can be changed without affecting their functions. For example, the microprocessor 630 may be disposed in the actuator 100, and the EMG sensor 610 may be disposed on the link assembly 220.

According to a possible embodiment of the present invention, the actuator 100 is provided with a roller on which the cable 300 is wound, a motor configured to drive the roller to rotate and controlled by the controller, and a transmission for transmitting driving force between the motor and the roller. The ankle assisting exoskeleton device also includes a power supply configured to be worn in front of the user's waist for supplying power to various power-consuming components.

Therefore, according to the above-mentioned embodiments, the heavier components (for example, motor, power supply, transmission, etc.) of the ankle assisting exoskeleton device are all set on the waist of the user, that is, most weight of the ankle assisting exoskeleton device is concentrated on the user's waist instead of on the user's lower limbs. This further reduces physical exhaustion of the user when wearing the ankle assisting exoskeleton device, thereby improving the comfort of the user and allowing the user to be able to wear it for a long time to have the ankle assisted in movement; and since the power supply is located in front of the waist, and the motor, transmission, etc. are located behind the waist, the power supply, motor, transmission, etc. can be counterweight to each other, which further improves the comfort of the user when wearing the ankle assisting exoskeleton device.

Referring to Figs. 1 and 2, according to a possible embodiment of the present invention, the ankle assisting exoskeleton device includes an actuator 100, and two independent lower limb supports 200 that are configured to be respectively worn on the left and right legs of the user, and two cables 300 corresponding to the two lower limb supports 200 respectively.

Therefore, according to the above-mentioned embodiment, when one of the ankles of the user needs assistance, the user can wear only one lower limb support 200 to assist the ankle to exercise; when both ankles of the user need assistance, the user can wear two independent lower limb supports 200.to simultaneously assist both ankles to exercise, which greatly improves the flexibility of the ankle assisting exoskeleton device in use.

For those of ordinary skill in the art, it is obvious that modifications and additions to technologies and structures should be regarded as being included in the scope of the present invention without departing from the scope of the present disclosure as set forth in the claims below The scope of the present disclosure is defined by the appended claims.

## Claims

1. An ankle assisting exoskeleton device comprising:
an actuator (100) configured to be worn behind a user's waist;
a cable (300),
a lower limb support (200) comprising:
a calf ring (210) configured to encircle a user's calf;
a link assembly (220) attached to the calf ring (210) and extending downwards;
a foot support (230), the foot support (230) comprising a front end (232) and a rear end (233) and being hinged between the front end (232) and the rear end (231) to a lower end of the link assembly (220), the foot support (230) including a pair of support arms (233, 234), the pair of support arms 233, 234 together with the rear end (231) are U-shaped and configured to at least partially horizontally surround a user's foot; and wherein the front end (232) of the foot support (230) is configured to vertically surround the user's foot and the rear end (231) is configured to be located behind the user's heel;
wherein the lower limb support (200) further comprises: a torsion spring (260) disposed between the lower end of the link assembly (220) and the foot support (230), the torsion spring (260) being configured to apply a torque to the foot support (230) causing the front end (232) to be lifted upwards; and
a sole pulling ring (250) hinged to the foot support (230) between the front end (232) and the rear end (231) of the foot support (230), the sole pulling ring (250) being configured to pull the user's sole; and
the cable (300) being connected at its ends to the actuator (100) and the rear end (231) of the foot support (230) so that the actuator (100) can apply an upward pull to the rear end (231) through the cable (300) to drive the user's foot to rotate around an ankle joint through an upward pulling force exerted on the user's sole.

2. The ankle assisting exoskeleton device according to claim 1, the pair of support arms (233, 234) connecting the rear end (231) to the front end (232) on left and right sides, the front end (232) being composed of support arm front ends (2331, 2341) of the pair of support arms (233, 234) and an instep strap (235) attached thereto, the instep strap (235) being configured to partially cover the user's instep.

3. The ankle assisting exoskeleton device according to claim 1, wherein the link assembly (220) comprises a pair of connecting rods (221, 222) arranged on left and right sides of the foot support (230), the pair of connecting rods (221, 222) being respectively attached to left and right sides of the calf ring (210) at their upper ends and respectively hinged to the foot support (230) at their lower ends.

4. The ankle assisting exoskeleton device according to claim 3, wherein the link assembly (220) comprises a support block (223) connecting the pair of connecting rods (221, 222) with each other along a partial height of the link assembly (220).

5. The ankle assisting exoskeleton device according to claim 1 further comprising a sleeve (400) around the cable (300) allowing the cable (300) to slide therein, the sleeve (400) being fixed to the actuator (100) at its upper end and connected to the lower limb support (200) at its lower end.

6. The ankle assisting exoskeleton device according to claim 5, wherein the link assembly (220) comprises a support block (223) connecting the pair of connecting rods (221, 222) with each other along a partial height of the link assembly (220), the lower limb support (200) further comprises a sleeve base (270) hinged to the support block (223), and the sleeve (400) is fixed to the sleeve base (270) at its lower end.

7. The ankle assisting exoskeleton device according to claim 1 further comprising:
one or more sensors configured to detect the user's biological signal and the pulling force applied by the cable (300) to the foot support (200) in real time; and
a controller configured to use a detected data from the sensors to control the pulling force applied by the cable (300) to the foot support (200) in real time.

8. The ankle assisting exoskeleton device according to claim 1, wherein the actuator (100) is provided with a roller around which the cable (300) is wound, a motor configured to drive the roller to rotate, and a transmission that transmits power between the motor and the roller, and the ankle assisting exoskeleton device further comprises a power supply configured to be worn in front of the user's waist for supplying power to various power-consuming components.

9. The ankle assisting exoskeleton device according to claim 1, comprising two independent lower limb supports (200) that are configured to be respectively worn on the user's left and right legs, and two cables (300) respectively correlated to the two lower limb supports (200).

## Patentansprüche

1. Knöchelgestützte Exoskelettvorrichtung, umfassend:
ein Betätigungselement (100), dafür konfiguriert, vom Benutzer hinten an der Hüfte getragen zu werden;
ein Zugseil (300),
eine Stütze für untere Gliedmaßen (200), umfassend:
einen Wadenring (210), dafür konfiguriert, eine Wade eines Benutzers zu umschließen;
eine Verbindungsanordnung (220), die an dem Wadenring (210) befestigt ist und sich nach unten erstreckt;
eine Fußstütze (230), wobei die Fußstütze (230) ein vorderes Ende (232) und ein hinteres Ende (233) umfasst und zwischen dem vorderen Ende (232) und dem hinteren Ende (231) an einem unteren Ende der Verbindungsanordnung (220) angelenkt ist, wobei die Fußstütze (230) ein Stützarmpaar (233, 234) umfasst, wobei das Stützarmpaar (233, 234) zusammen mit dem hinteren Ende (231) U-förmig und dafür konfiguriert ist, einen Fuß eines Benutzers zumindest teilweise horizontal zu umgeben; und wobei das vordere Ende (232) der Fußstütze (230) dafür konfiguriert ist, den Fuß des Benutzers vertikal zu umgeben, und das hintere Ende (231) dafür konfiguriert ist, sich hinter der Ferse des Benutzers zu befinden;
wobei die Stütze für untere Gliedmaßen (200) ferner umfasst: eine Torsionsfeder (260), die zwischen dem unteren Ende der Verbindungsanordnung (220) und der Fußstütze (230) angeordnet ist, wobei die Torsionsfeder (260) dafür konfiguriert ist, ein Drehmoment auf die Fußstütze (230) aufzubringen, was bewirkt, dass das vordere Ende (232) nach oben angehoben wird; und
einen Sohlenzugring (250), der an der Fußstütze (230) zwischen dem vorderen Ende (232) und dem hinteren Ende (231) der Fußstütze (230) angelenkt ist, wobei der Sohlenzugring (250) dafür konfiguriert ist, die Fußsohle des Benutzers hochzuziehen; und
wobei das Zugseil (300) an seinen Enden mit dem Betätigungselement (100) und dem hinteren Ende (231) der Fußstütze (230) verbunden ist, sodass das Betätigungselement (100) durch das Zugseil (300) einen nach oben wirkenden Zug zum hinteren Ende (231) vornehmen kann, um den Fuß des Benutzers durch eine Aufwärtszugkraft, die auf die Fußsohle des Benutzers wirkt, dazu zu bringen, sich um ein Knöchelgelenk zu drehen.

2. Knöchelgestützte Exoskelettvorrichtung nach Anspruch 1, wobei das Stützarmpaar (233, 234) das hintere Ende (231) auf der linken und rechten Seite mit dem vorderen Ende (232) verbindet, wobei das vordere Ende (232) aus vorderen Stützarmenden (2331, 2341) des Stützarmpaars (233, 234) und einem daran befestigten Spannriemen (235) besteht, wobei der Spannriemen (235) dafür konfiguriert ist, den Spann des Benutzers teilweise abzudecken.

3. Knöchelgestützte Exoskelettvorrichtung nach Anspruch 1, wobei die Verbindungsanordnung (220) ein Verbindungsstangenpaar (221, 222) umfasst, die an der linken und rechten Seite der Fußstütze (230) angeordnet sind, wobei das Verbindungsstangenpaar (221, 222) links bzw. rechts vom Wadenring (210) an den oberen Enden befestigt ist, und jeweils an der Fußstütze (230) an deren unteren Enden angelenkt ist.

4. Knöchelgestützte Exoskelettvorrichtung nach Anspruch 3, wobei die Verbindungsanordnung (220) einen Stützblock (223) umfasst, der das Verbindungsstangenpaar (221, 222) miteinander entlang einer Teilhöhe der Verbindungsanordnung (220) verbindet.

5. Knöchelgestützte Exoskelettvorrichtung nach Anspruch 1, ferner eine Hülse (400) um das Zugseil (300) umfassend, was es dem Zugseil (300) ermöglicht, darin zu gleiten, wobei die Hülse (400) am oberen Ende an dem Betätigungselement (100) befestigt und am unteren Ende mit der Stütze für untere Gliedmaßen (200) verbunden ist.

6. Knöchelgestützte Exoskelettvorrichtung nach Anspruch 5, wobei die Verbindungsanordnung (220) einen Stützblock (223) umfasst, der das Verbindungsstangenpaar (221, 222) miteinander entlang einer Teilhöhe der Verbindungsanordnung (220) verbindet, wobei die Stütze für untere Gliedmaßen (200) ferner eine Hülsenaufnahme (270) umfasst, die an den Stützblock (223) angelenkt ist, und die Hülse (400) an ihrem unteren Ende an der Hülsenaufnahme (270) befestigt ist.

7. Knöchelgestützte Exoskelettvorrichtung nach Anspruch 1, ferner umfassend: einen oder mehrere Sensoren, die dafür konfiguriert sind, in Echtzeit das biologische Signal des Benutzers und die Zugkraft, die von dem Zugseil (300) auf die Fußstütze (200) ausgeübt wird, zu erkennen; und einen Controller, der dafür konfiguriert ist, erkannte Daten von den Sensoren zu verwenden, um die vom Zugseil (300) auf die Fußstütze (200) ausgeübte Zugkraft in Echtzeit zu steuern.

8. Knöchelgestützte Exoskelettvorrichtung nach Anspruch 1, wobei das Betätigungselement (100) mit einer Rolle bereitgestellt wird, um die das Zugseil (300) gewickelt wird, einem Motor, der dafür konfiguriert ist, die Rolle anzutreiben, sodass sie sich dreht, und ein Getriebe, das Kraft zwischen dem Motor und der Rolle überträgt, und die knöchelgestützte Exoskelettvorrichtung ferner eine Stromversorgung umfasst, die dafür konfiguriert ist, vom Benutzer vorne an der Hüfte getragen zu werden, um den verschiedenen stromverbrauchenden Komponenten Strom zuzuführen.

9. Knöchelgestützte Exoskelettvorrichtung nach Anspruch 1, zwei unabhängige Stützen für untere Gliedmaßen (200) umfassend, die dafür konfiguriert sind, am linken bzw. rechten Bein des Benutzers getragen zu werden, und zwei Zugseile (300), die jeweils den zwei Stützen für untere Gliedmaßen (200) zugeordnet sind.

## Revendications

1. Dispositif d'exosquelette d'assistance de cheville comprenant :
un actionneur (100) conçu pour être porté derrière la taille d'un utilisateur ;
un câble (300),
un support de membre inférieur (200) comprenant :
un anneau de veau (210) conçu pour encercler la veau d'un utilisateur ;
un ensemble liaison (220) attaché à l'anneau de veau (210) et s'étendant vers le bas ;
un support de pied (230), le support de pied (230) comprenant une extrémité avant (232) et une extrémité arrière (233) et étant articulé entre l'extrémité avant (232) et l'extrémité arrière (231) à une extrémité inférieure de l'ensemble liaison (220), le support de pied (230) incluant une paire de bras de support (233, 234), la paire de bras de support (233, 234) conjointement avec l'extrémité arrière (231) sont en forme de U et conçus pour entourer horizontalement au moins partiellement le pied d'un utilisateur ; et dans lequel l'extrémité avant (232) du support de pied (230) est conçue pour entourer verticalement le pied de l'utilisateur et l'extrémité arrière (231) est conçue pour être située derrière le talon de l'utilisateur ;
dans lequel le support de membre inférieur (200) comprend en outre : un ressort de torsion (260) disposé entre l'extrémité inférieure de l'ensemble liaison (220) et le soutien de pied (230), le ressort de torsion (260) étant conçu pour appliquer un couple au support de pied (230) amenant l'extrémité avant (232) à être soulevée vers le haut ; et
un anneau de traction de semelle (250) articulé au support de pied (230) entre l'extrémité avant (232) et l'extrémité arrière (231) du support de pied (230), l'anneau de traction de semelle (250) étant conçu pour tirer la semelle de l'utilisateur ; et
le câble (300) étant relié au niveau de ses extrémités à l'actionneur (100) et à l'extrémité arrière (231) du support de pied (230) de telle sorte que l'actionneur (100) peut appliquer une traction ascendante à l'extrémité arrière (231) à travers le câble (300) pour entraîner le pied de l'utilisateur à tourner autour d'une articulation de cheville à travers une force de traction ascendante exercée sur la semelle de l'utilisateur.

2. Dispositif d'exosquelette d'assistance de cheville selon la revendication 1, la paire de bras de support (233, 234) reliant l'extrémité arrière (231) à l'extrémité avant (232) sur les côtés gauche et droit, l'extrémité avant (232) étant composée d'extrémités avant de bras de support (2331, 2341) de la paire de bras de support (233, 234) et une lanière de cou-de-pied (235) attachée à celles-ci, la lanière de cou-de-pied (235) étant conçue pour recouvrir partiellement le cou-de-pied de l'utilisateur.

3. Dispositif d'exosquelette d'assistance de cheville selon la revendication 1, dans lequel l'ensemble liaison (220) comprend une paire de tiges de liaison (221, 222) agencées sur les côtés gauche et droit du support de pied (230), la paire de tiges de liaison (221, 222) étant respectivement attachées aux côtés gauche et droit de l'anneau de veau (210) au niveau de leurs extrémités supérieures et respectivement articulées au support de pied (230) au niveau de leurs extrémités inférieures.

4. Dispositif d'exosquelette d'assistance de cheville selon la revendication 3, dans lequel l'ensemble liaison (220) comprend un bloc de support (223) reliant la paire de tiges de liaison (221, 222) l'une avec l'autre le long d'une hauteur partielle de l'ensemble liaison (220).

5. Dispositif d'exosquelette d'assistance de cheville selon la revendication 1 comprenant en outre un manchon (400) autour du câble (300) permettant au câble (300) de glisser à l'intérieur de celui-ci, le manchon (400) étant fixé à l'actionneur (100) au niveau de son extrémité supérieure et relié au support de membre inférieur (200) au niveau de son extrémité inférieure.

6. Dispositif d'exosquelette d'assistance de cheville selon la revendication 5, dans lequel l'ensemble liaison (220) comprend un bloc de support (223) reliant la paire de tiges de liaison (221, 222) l'une avec l'autre le long d'une hauteur partielle de l'ensemble liaison (220), le support de membre inférieur (200) comprend en outre une base de manchon (270) articulée au bloc de support (223), et le manchon (400) est fixé à la base de manchon (270) au niveau de son extrémité inférieure.

7. Dispositif d'exosquelette d'assistance de cheville selon la revendication 1 comprenant en outre :
un ou plusieurs capteurs conçus pour détecter le signal biologique de l'utilisateur et la force de traction appliquée par le câble (300) au support de pied (200) en temps réel ; et
un dispositif de commande conçu pour utiliser une donnée détectée depuis les capteurs pour commander la force de traction appliquée par le câble (300) au support de pied (200) en temps réel.

8. Dispositif d'exosquelette d'assistance de cheville selon la revendication 1, dans lequel l'actionneur (100) est pourvu d'un rouleau autour duquel le câble (300) est enroulé, d'un moteur conçu pour entraîner le rouleau à tourner, et d'une transmission qui transmet l'énergie entre le moteur et le rouleau, et le dispositif d'exosquelette d'assistance de cheville comprend en outre une alimentation électrique conçue pour être portée devant la taille de l'utilisateur pour fournir de l'énergie à divers constituants consommant de l'énergie.

9. Dispositif d'exosquelette d'assistance de cheville selon la revendication 1, comprenant deux supports de membre inférieur (200) indépendants qui sont conçus pour être portés respectivement sur les jambes gauche et droite de l'utilisateur, et deux câbles (300) respectivement corrélés aux deux supports de membre inférieur (200).
